# EUROPEAN PATENT APPLICATION

(11) **EP 4 559 782 A1**
(43) Date of publication of application: **28.05.2025**
(21) Application number: 22951365.0
(22) Date of filing: 21.07.2022
(51) Int. Cl.: B62D 1/185, B60R 25/021, B62D 1/181

(54) **STEERING DEVICE**

(71) Applicant: JTEKT Corporation, Kariya-shi, Aichi 448-8652 (JP); JTEKT COLUMN SYSTEMS CORPORATION, Kosai-shi, Shizuoka 431-0431 (JP)
(72) Inventor: IKEDA, Kosuke, Kariya-shi, Aichi 448-8652 (JP); UESAKA, Yota, Kosai-shi, Shizuoka 431-0431 (JP)
(74) Representative: Winter, Brandl - Partnerschaft mbB
(86) International application number: PCT/JP2022/028332
(87) International publication number: WO 2024/018587

(57) **Abstract**

A steering device (100) includes: a first shaft (110) that holds an operating member (200); a second shaft (120); a first tube (130) that moves with the first shaft; a second tube (140) that guides the first tube (130); a moving mechanism (150) that moves the first tube (130) to a first region in which the first shaft (110) is allowed to rotate and a second region in which the first shaft (110) is not allowed to rotate; a lock piece (160) disposed on the proximal end side with respect to the first tube (130) positioned in the first region; and a biasing member (170) that biases the lock piece (160). When the first tube (130) is positioned in the second region, the lock piece (160) engages with an engaged portion (112) provided on the first shaft (110) so as not to allow the first shaft (110) to rotate.

## Description

### TECHNICAL FIELD

The present invention relates to steering devices for steering a vehicle etc.

### BACKGROUND ART

For example, there is a technique in which, in a steering column that automatically extends and contracts, a lock mechanism is activated by causing the steering column to contract, as in a steering device described in Patent Document 1. When the lock mechanism is activated, a shaft to which a steering wheel is attached is not allowed to rotate, so that an operation of rotating the steering wheel is not allowed to be performed.

### Related Art Documents

### Patent Documents

Patent Document 1: Japanese Unexamined Patent Application Publication No. 2009-298229 (JP 2009-298229 A)

### SUMMARY OF THE INVENTION

### Problem to be Solved by the Invention

A lock piece that is biased radially inward by a protruding spring is disposed in the lock mechanism described in Patent Document 1. This lock piece is pressed against the outer peripheral surface of a movable tube that moves when the position of the steering wheel is adjusted according to the driver's body shape. This causes friction between the lock piece and the movable tube, which raises concerns about durability and generation of abnormal noise.

The present invention was made in view of the above issue, and it is an object of the present invention to provide a steering device in which a lock piece does not rub against a movable tube in a biasing direction during adjustment of the position of a steering wheel.

### Means for Solving the Problem

In order to achieve the above object, a steering device according to one aspect of the present invention includes: a first shaft with an axis that extends from a proximal end toward a distal end, the first shaft holding an operating member rotatably about the axis; a second shaft disposed on a proximal end side with respect to the first shaft and inserted in the first shaft so as to be rotatable about the axis and movable in an axial direction; a first tube that rotatably supports the first shaft inside and that moves with the first shaft in the axial direction; a second tube that guides the first tube in the axial direction and that rotatably supports the second shaft inside; a moving mechanism that moves the first tube in the axial direction to a first region in which the first shaft is allowed to rotate and a second region that is located on the proximal end side with respect to the first region and in which the first shaft is not allowed to rotate; a lock piece that is movable in a radial direction with respect to the second tube so as to be located on the proximal end side with respect to the first tube positioned in the first region; and a biasing member that biases the lock piece radially inward with respect to the second tube. When the first tube is positioned in the second region, the lock piece engages with an engaged portion provided on the first shaft so as not to allow the first shaft to rotate.

### Effects of the Invention

Even when the moving mechanism moves the first tube in a region in which a driver can operate the operating member, the rock piece and the first tube will not rub against each other. No frictional damage occurs between the lock piece and the first tube. It is therefore possible to provide a structure that ensures that the first tube has sufficient durability and that reduces generation of abnormal noise.

### BRIEF DESCRIPTION OF THE DRAWINGS

[FIG. 1] FIG. 1 is a perspective view of a steering device in an extended state.
[FIG. 2] FIG. 2 is a sectional view of the steering device in the extended state.
[FIG. 3] FIG. 3 is a perspective view of the steering device in a contracted state in which a second tube not shown.
[FIG. 4] FIG. 4 is a sectional view of the steering device in the contracted state.
[FIG. 5] FIG. 5 is a sectional view of a first modification of the steering device.
[FIG. 6] FIG. 6 is a sectional view of a second modification of the steering device.

### MODES FOR CARRYING OUT THE INVENTION

An embodiment of a steering device according to the present invention will be described below with reference to the drawings. The following embodiment shows an example in order to describe the present invention, and is not intended to limit the present invention. For example, the shapes, structures, materials, components, relative positional relationships, connection states, numerical values, mathematical expressions, and the content, order, etc. of steps of each method shown in the following embodiment are merely by way of example, and the present invention may include the content that is not described below. Although geometric terms such as parallel and perpendicular are sometimes used, these terms are not used in a mathematically strict sense, and may include substantially allowable variations, deviations, etc. Terms such as simultaneously and same also include substantially allowable margins.

The drawings are schematic illustrations with exaggerations, omissions, or adjustments of proportions made as appropriate in order to describe the present invention, and the shapes, positional relationships, and proportions shown in the drawings are different from actual shapes, positional relationships, and proportions. The X-axis, Y-axis, and Z-axis that are shown in the drawings indicate rectangular coordinates that are set as desired in order to describe the drawings. In other words, the Z-axis is not necessarily an axis in the vertical direction, and the X-axis and Y-axis are not necessarily present in a horizontal plane.

A plurality of inventions may be comprehensively described as one embodiment below. Part of the content provided below is described as optional components related to the present invention.

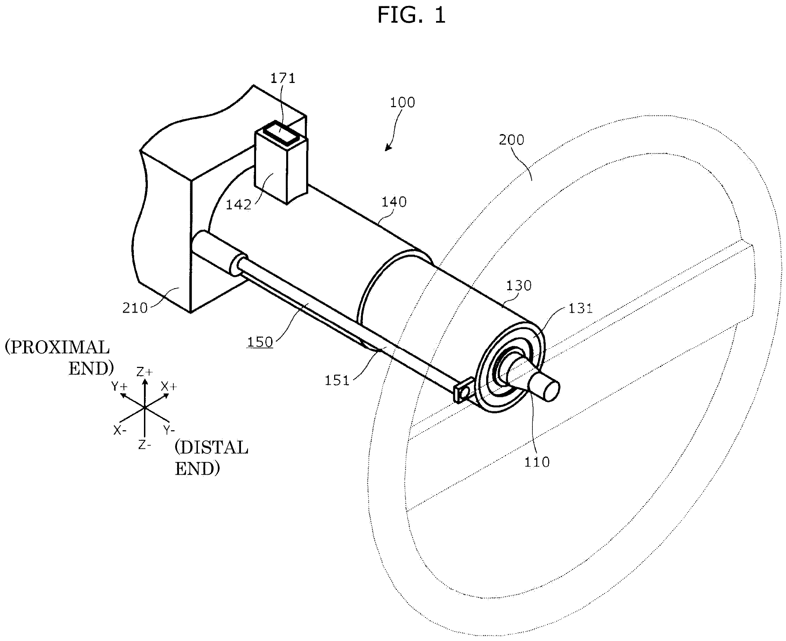

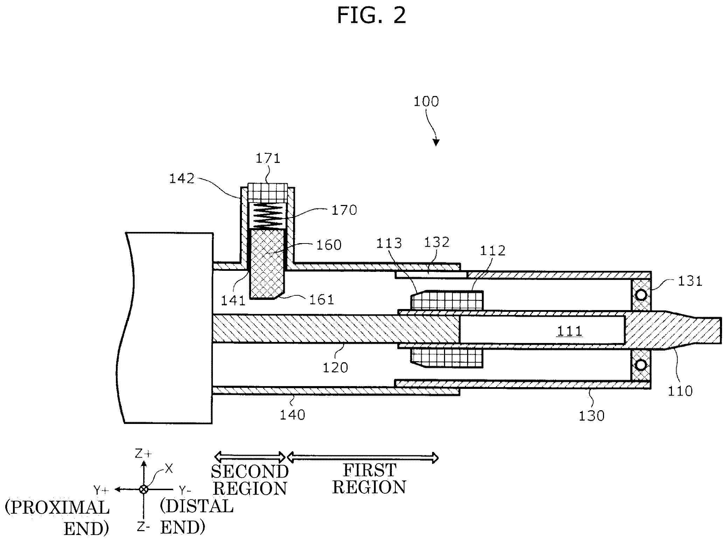

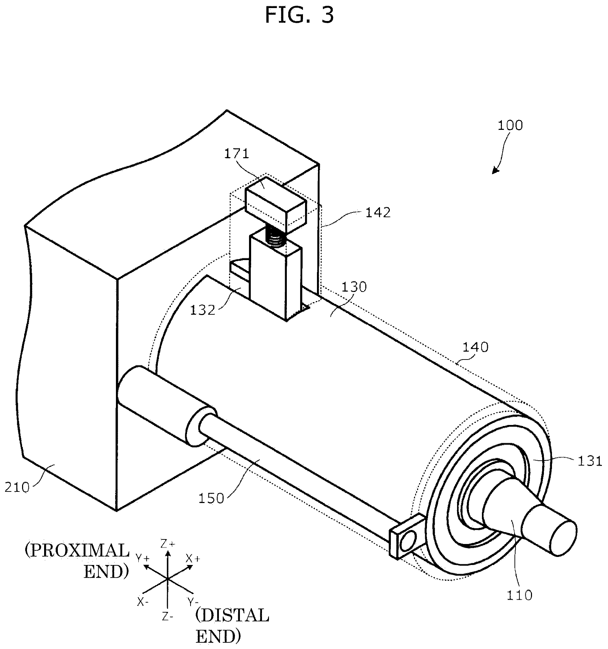

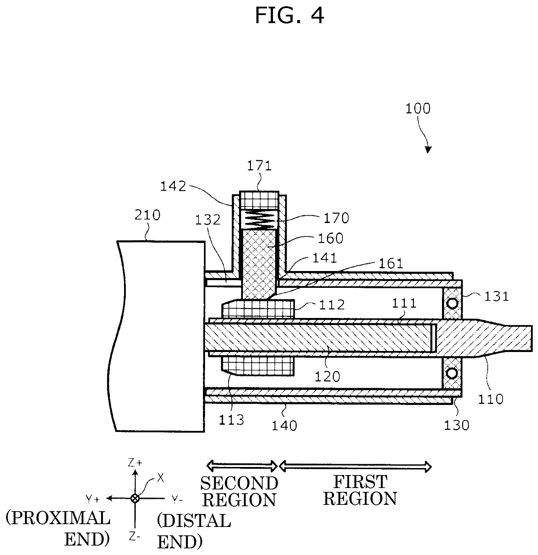

FIG. 1 is a perspective view of a steering device 100 in an extended state. FIG. 2 is a sectional view of the steering device 100 in the extended state. FIG. 3 is a perspective view of the steering device 100 in a contracted state in which a second tube is not shown. FIG. 4 is a sectional view of the steering device 100 in the contracted state. Although the steering device 100 is used in such an attitude that a first shaft 110 etc. are obliquely tilted with respect to a horizontal plane, the axes of the first shaft 110 etc. will be described as being along the Y-axis in the figures. Y+ corresponds to the front side of a vehicle, and Y- corresponds to the rear side of the vehicle. In the present embodiment, a first region and a second region that are shown in FIGS. 2 and 4 indicate regions in which a first tube 130 moves in an axial direction, based on the end face on the proximal end side of the first tube 130.

The steering device 100 is disposed in front of a driver's seat (not shown) in a vehicle such as a passenger vehicle, and rotatably holds an operating member 200 that is operated by a driver seated in the driver's seat. The steering device 100 includes the first shaft 110, a second shaft 120, the first tube 130, a second tube 140, a moving mechanism 150, a lock piece 160, and a biasing member 170.

The first shaft 110 is a rod-shaped member called an upper shaft etc., and is disposed in such a manner that its imaginary axis extends from a proximal end (end on the Y+ side in the figures) toward a distal end (end on the Y- side in the figures) (extends in the Y-axis direction in the figures). The first shaft 110 is a member that holds the operating member 200 rotatably about the axis. An insertion hole 111 into which the second shaft 120 is inserted is formed in the first shaft 110 except for its distal end portion.

In the present embodiment, an engaged portion 112 that engages with the lock piece 160 (described in detail later) is attached to the outer periphery of a proximal end portion of the first shaft 110. The engaged portion 112 is a cylindrical member through which the proximal end portion of the first shaft 110 is inserted and that is stationary in both the axial direction and a circumferential direction. The outer peripheral surface of the engaged portion 112 has ridges and grooves (not shown) that extend in the axial direction. These ridges and grooves engage in the circumferential direction with ridges and grooves (not shown) provided on an end face of the lock piece 160, which allows the engaged portion 112 to slide in the axial direction. Examples of the ridges and grooves provided on the engaged portion 112 and the lock piece 160 include serrations and splines.

A first contact surface 113 that is a contact surface tilted radially away from the first shaft 110 as it gets closer to the distal end side is provided between the end face on the proximal end side of the engaged portion 112 and the outer peripheral surface of the engaged portion 112. The first contact surface 113 is a surface that first comes into contact with the lock piece 160 when the engaged portion 112 moves toward the proximal end side, and as the engaged portion 112 moves further toward the proximal end side, generates a force that moves the lock piece 160 radially outward.

The second shaft 120 is a rod-shaped member called a lower shaft, a middle shaft, etc., and is disposed coaxially with the first shaft 110. The second shaft 120 is disposed in such a manner that it is inserted into the insertion hole 111 of the first shaft 110 from the proximal end side. The second shaft 120 is inserted into the first shaft 110 in a fitted state by, for example, serration fitting or spline fitting such that the second shaft 120 can transfer torque and can move in the axial direction (Y-axis direction in the figures).

The second shaft 120 is connected to a motor via a reduction gear 210, and steering assist torque is applied to the second shaft 120. In the case where the steering device 100 has a steer-by-wire function, a reaction force to be applied to the driver who operates the operating member 200 is applied to the second shaft 120.

The first tube 130 is a cylindrical member that rotatably supports the first shaft 110 inside and that moves with the first shaft 110 in the axial direction. In the present embodiment, the first shaft 110 is coaxially disposed inside the first tube 130. The first tube 130 holds the first shaft 110 via a bearing 131. The first tube 130 moves with the first shaft 110 in the axial direction (Y-axis direction in the figures) via the bearing 131, and holds the first shaft 110 via the bearing 131 such that the first shaft 110 is rotatable in the circumferential direction about the axis.

The first tube 130 is a cylindrical member and has, on the proximal end side, a cut 132 extending in the axial direction from the edge of the first tube 130. The cut 132 extends through the first tube 130 in a radial direction and is open on its proximal end side. When the first tube 130 enters the second region (see FIG. 2), the lock piece 160 is inserted into the cut 132 so as to pass through the cut 132. This avoids interference (friction) between the lock piece 160 and the first tube 130.

The second tube 140 is a cylindrical member that guides the first tube 130 in the axial direction when the first tube 130 is inserted thereinto from the distal end side, and the second shaft 120 is disposed inside the second tube 140. In the present embodiment, the second tube 140 is stationary with respect to a vehicle body at least in the axial direction. The second tube 140 may tilt with respect to the vehicle body.

A peripheral wall of a proximal end portion of the second tube 140 has a through hole 141 through which the lock piece 160 passes. The second tube 140 includes a lock mechanism housing portion 142 having a rectangular prism shape surrounding the through hole 141 of the second tube 140 and protruding radially outward from the peripheral surface of the second tube 140. The lock mechanism housing portion 142 guides the lock piece 160 housed inside in the radial direction (Z-axis direction in the figures). The lock mechanism housing portion 142 holds the lock piece 160 stationary in the circumferential and axial directions. Accordingly, when the lock piece 160 engages with the engaged portion 112 of the first shaft 110, the first shaft 110 is not allowed to rotate around its axis. When the first shaft 110 moves in the axial direction with the first tube positioned in the second region, the lock piece 160 slides on the engaged portion 112. In other words, the second region is a region that is located on the proximal end side with respect to the first region and where the first shaft 110 is not allowed to rotate.

The moving mechanism 150 moves the first tube 130 with respect to the second tube 140 in the axial direction. The moving mechanism 150 is not particularly limited, and any mechanism can be used. In the present embodiment, the moving mechanism 150 includes a lead screw 151, a lead nut (not shown), and a motor (not shown) that rotates the lead nut. The lead nut is stationary with respect to the second tube 140 in the axial direction, and the lead screw 151 extends in the axial direction and is threaded into the lead nut. The lead nut is rotated by the motor to advance or withdraw the lead screw 151, thereby moving the first tube 130 fixed to the distal end of the lead screw 151.

The lock piece 160 is a highly rigid member that is stationary with respect to the second tube 140 in the axial direction (Y-axis direction in the figures) and about the axis so as to be located on the proximal end side with respect to the first tube 130 in the first region (see FIG. 2) and that is movable in the radial direction (Z-axis direction in the figures). The first region is a region in the axial direction where the first shaft 110 is allowed to rotate. In the present embodiment, the lock piece 160 is in the form of a rectangular block, and its surface facing the first shaft 110 is curved inward so as to conform to the outer peripheral surface of the engaged portion 112. The surface of the lock piece 160 that faces the first shaft 110 has ridges and grooves that extend in the axial direction and that mesh with the ridges and grooves on the outer peripheral surface of the engaged portion 112 in the circumferential direction.

A second contact surface 161 that is a contact surface tilted radially away from the second shaft 120 as it gets closer to the distal end side is provided between the end face of lock piece 160 that faces the second shaft 120 and the surface on the distal end side of the lock piece 160. The second contact surface 161 is a surface that first comes into contact with the first contact surface 113 of the engaged portion 112 when the engaged portion 112 moves toward the proximal end side, and as the engaged portion 112 moves further toward the proximal end side, generates a force that moves the lock piece 160 radially outward.

The biasing member 170 includes, as its base portion, a plug 171 fixed to the outer end of the lock mechanism housing portion 142, and biases the lock piece 160 radially inward with respect to the second tube 140. The type of the biasing member 170 is not particularly limited. In the present embodiment, a helical spring is used.

Next, the operation of the steering device 100 will be described. When a drive system of the vehicle, such as an engine and a motor, is off, the first tube 130 of the steering device 100 is positioned in the second region by the moving mechanism 150, and the first shaft 110 is not allowed to rotate by the lock piece 160, as shown in FIG. 4. This disables steering of the vehicle, and therefore can prevent theft. Even when the driver gets in and out of the vehicle while holding onto the operating member 200, the operating member 200 can stably support the driver because the operating member 200 is stationary. In the case of a vehicle that can perform autonomous driving, the above configuration can prevent the operating member 200 from rotating due to vibrations of the vehicle during autonomous driving.

Next, when the driver operates the operating member 200, the moving mechanism 150 advances the first tube 130 and the first shaft 110 together with the operating member 200 toward the distal end side. The lock piece 160 and the engaged portion 112 are thus disengaged from each other, so that the operating member 200 attached to the first shaft 110 is allowed to rotate and becomes operable by the driver. In the period from when the lock piece 160 and the engaged portion 112 are disengaged from each other until the first tube 130 is positioned at a predetermined position, the first tube 130 first passes through the second region, but the lock piece 160 and the first tube 130 do not rub against each other due to the cut 132 provided in the first tube 130. Moreover, when the first tube 130 moves in the first region, the lock piece 160 does not rub against not only the first tube 130 but also other members. Therefore, durability of the steering device 100 will not be reduced by abrasive wear of the first tube 130. Generation of abnormal noise due to movement of the first tube 130 can also be prevented. Design flexibility of the steering device 100 is also improved, so that a long first region can be provided.

Providing the contact surface on both the lock piece 160 and the engaged portion 112 allows smooth engagement between the lock piece 160 and the engaged portion 112, and also allows smooth disengagement between the lock piece 160 and the engaged portion 112 that are in the engaged state. Accordingly, a strong impact is less likely to be applied by the biasing member 170 when the lock piece 160 and the engaged portion 112 are engaged with or disengaged from each other, so that generation of abnormal noise and occurrence of abrasions due to the impact.

Moreover, providing the cut 132 having a minimum width that can avoid interference between the first tube 130 and the lock piece 160 when the first tube 130 is positioned in the second region allows the proximal end of the first shaft 110 to have higher rigidity. This can reduce wobbling when the first tube 130 moves in the first region and wobbling in the operating state with the first tube 130 stopped in the first region.

The present invention is not limited to the above embodiment. For example, the present invention may include other embodiments that are implemented by combining the components described in the present specification as desired or by omitting some of the components. The present invention also includes modifications obtained by making various changes that are conceivable by those skilled in the art to the above embodiment without departing from the spirit and scope of the present invention, that is, from the meaning of the language set forth in the claims.

For example, although an example in which the engaged portion 112 is a separate member from the first shaft 110 and is fixed to the first shaft 110 is described above, the engaged portion 112 may be provided integrally with the first shaft 110.

Although an example in which the contact surface is provided on both the lock piece 160 and the engaged portion 112 is described above, the contact surface may be provided on either the lock piece 160 or the engaged portion 112.

The contact surface need not necessarily be flat, and may be curved.

The shape of the lock piece 160 is not particularly limited, and may be any shape such as a cylinder.

The fitting state between the first shaft 110 and the second shaft 120 need not necessarily be serration fitting or spline fitting. A fitting structure with a polygonal section, a fitting structure using a key, etc. may be used.

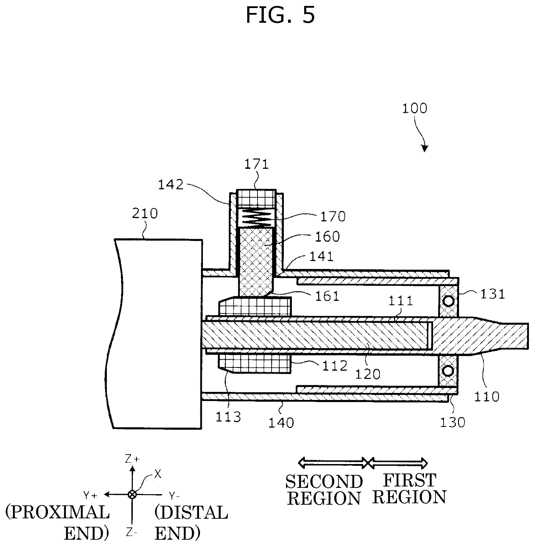

As shown in FIG. 5, the first tube 130 may not have a cut, and the proximal end of the first shaft 110 and the engaged portion 112 may protrude from the base end of the first tube 130.

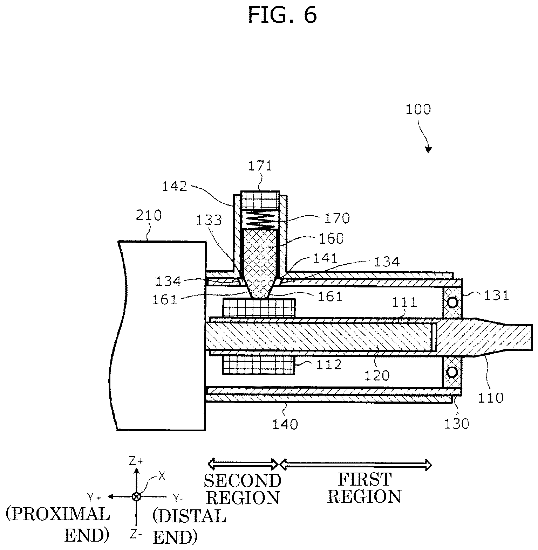

Although the cut 132 is described above, this does not deny that an insertion through-hole 133 may be provided in the peripheral wall of the first tube 130 as shown in FIG. 6. In this case, second contact surfaces 161 may be provided on both the proximal and distal end sides of the lock piece 160. The insertion through-hole 133 of the first tube 130 may have a third contact surface 134.

### INDUSTRIAL APPLICABILITY

The present invention can be applicable to vehicles such as passenger vehicles, buses, trucks, construction equipment, and agricultural equipment.

### Description of the Reference Numerals

100 ... steering device, 110 ... first shaft, 111 ... insertion hole, 112 ... engaged portion, 113 ... first contact surface, 120 ... second shaft, 130 ... first tube, 131 ... bearing, 132 ... cut, 133 ... insertion through-hole, 134 ... third equal contact surface, 140 ... second tube, 141 ... through hole, 142 ... lock mechanism housing portion, 150 ... moving mechanism, 160 ... lock piece, 161 ... second contact surface, 170 ... biasing member, 171 ... plug, 200 ... operating member, 210 ... reduction gear

## Claims

1. A steering device, comprising:
a first shaft with an axis that extends from a proximal end toward a distal end, the first shaft holding an operating member rotatably about the axis;
a second shaft disposed on a proximal end side with respect to the first shaft and inserted in the first shaft so as to be rotatable about the axis and movable in an axial direction;
a first tube that rotatably supports the first shaft inside and that moves with the first shaft in the axial direction;
a second tube that guides the first tube in the axial direction and that rotatably supports the second shaft inside;
a moving mechanism that moves the first tube in the axial direction to a first region in which the first shaft is allowed to rotate and a second region that is located on the proximal end side with respect to the first region and in which the first shaft is not allowed to rotate;
a lock piece that is movable in a radial direction with respect to the second tube so as to be located on the proximal end side with respect to the first tube positioned in the first region; and
a biasing member that biases the lock piece radially inward with respect to the second tube, wherein, when the first tube is positioned in the second region, the lock piece engages with an engaged portion provided on the first shaft so as not to allow the first shaft to rotate.

2. The steering device according to claim 1, wherein the first tube has a cut that is open on the proximal end side and through which the lock piece passes when the first tube is positioned in the second region.

3. The steering device according to claim 1 or 2, wherein either or both of a distal end side of the lock piece and the proximal end side of the engaged portion include a contact surface tilted from the proximal end side toward the distal end side.
